# EUROPEAN PATENT SPECIFICATION

(11) **EP 1 609 126 B1**
(45) Date of publication and mention of the grant of the patent: **28.11.2007**
(21) Application number: 04725222.6
(22) Date of filing: 01.04.2004
(51) Int. Cl.: G09F 13/18

(54) **CONVEX LUMINANT SIGN**
KONVEXES LEUCHTSCHILD
ENSEIGNE LUMINEUSE

(30) Priority: 02.04.2003 SE 0300982
(43) Date of publication of application: 28.12.2005
(73) Proprietor: Karlsson, Dennis, Alingsas 441 93 (SE)
(72) Inventor: Karlsson, Dennis, Alingsas 441 93 (SE)
(74) Representative: Johansson, Lars-Erik
(86) International application number: PCT/SE2004/000498
(87) International publication number: WO 2004/088617

(56) References cited:
- EP-A2- 0 171 776
- DE-A1- 4 311 018
- GB-A- 1 318 532
- US-A1- 2004 045 199

## Description

### TECHNICAL FIELD

The present invention relates to an electric sign comprising an front side, a rear side and at least one side surface that extends between and links together the front side and the rear side, where a light guiding interior of a transparent material is comprised between said front side, rear side and side surface, a lighting appliance being arranged in connection with said side surface in order to emit light to the light guiding material, and the rear side being adapted to comprise figures reflecting the light from the lighting appliance, through the front side of the electric sign.

### PRIOR ART

Banderol-like transparent signs with figures in the form of text, images or patterns, that appear to be luminous are sometimes used for advertising purposes, for lighting, for information at e.g. exhibitions, or for pure decoration. The signs are manufactured from a light guiding, transparent material and are lighted up by one or more light sources in connection with at least one of the sides of the electric sign. The figures are applied to the rear side of the sign, in a manner known to the skilled person. Electric signs of this type are known from DE 201 18 930, DE 43 41 015, US 2001/0049893, GB 2 139 796 and US 5,276,591.

For strength reasons, these electric signs have a fairly limited size. If larger sizes are required, the electric sign is often provided with a structural frame. The structural frame also prevents unwanted leakage of light along the sides of the electric sign.

A need also exists for cantilever banderol-like signs, for which it is desired not to provide the sign with a structural frame. For strength reasons, such signs have a rectangular cross-section, where the thickness of the sign must be increased in proportion to the length and width of the sign. The edges of the electric sign are sealed with paint or mirror-glass foliation, in order to prevent unwanted leakage of light along the sides of the sign.

Yet another disadvantage is that the figures applied on the rear side are visible only within a fairly narrow viewing angle, which means that the figures will have the most distinct appearance when the viewer is positioned essentially straight in front of the sign. If the viewer on the contrary is positioned by the side of the sign or at another level, the visibility is considerably impaired.

### BRIEF ACCOUNT OF THE INVENTION

It is an object of the present invention to eliminate or at least minimize the above mentioned problems, and this is achieved by providing an electric sign with a convex front side of the light guiding, transparent material.

Thanks to the invention, an electric sign is obtained that offers a considerably improved viewing angle as compared to electric signs having a planar front side. Furthermore, an optical magnification is obtained of the figures applied on the rear side, which enhances visibility.

By a electric sign according to the invention, one or more of the following advantages can furthermore be obtained.
- Improved strength
- Possibility to make larger cantilever signs
- Possibility to give the electric sign a curved shape
- No sealing required to prevent unwanted leakage of light

The invention is primarily intended for small size electric signs, to be used as bearers of information or for advertising or decoration purposes, where the viewer is positioned within some tenths of metres from the electric sign. Such electric signs have a size of from a few square centimetres, e.g. 0.5 x 2 cm as an illuminated emblem on a small detail such as some type of domestic electronics, and up to some square metres as bearer of information in public environments. One example of this is a rod-shaped electric sign that is used to mark out and illuminate an emergency exit route, where the electric sign can be a continuous illuminated rod having a length of several metres and a width of 5-20 cm. It should however be understood that other sizes and other fields of application are comprised in the invention.

### BRIEF DESCRIPTION OF THE DRAWINGS

In the following, the invention will be described in greater detail with reference to the attached drawing figures, of which:
Fig. 1 shows in perspective a preferred embodiment of the light guiding material in a sign,
Fig. 2 shows an electric sign in a front view,
Fig. 3a shows a cross-section of a transparent rod,
Fig. 3b shows a view from above of a transparent rod,
Fig. 4a shows a cross-section of two combined, transparent rods,
Fig. 4b shows a cross-section of three combined, transparent rods,
Fig. 5a shows an alternative embodiment of an electric sign,
Fig. 5b shows a cross-section of a double-sided electric sign,
Fig. 6a shows an alternative embodiment of an electric sign, and
Fig. 6b shows an alternative embodiment of an electric sign.

### DETAILED DESCRIPTION OF THE INVENTION

The present invention relates to an electric sign intended to be a stand-alone sign or mounted on a wall or an object.

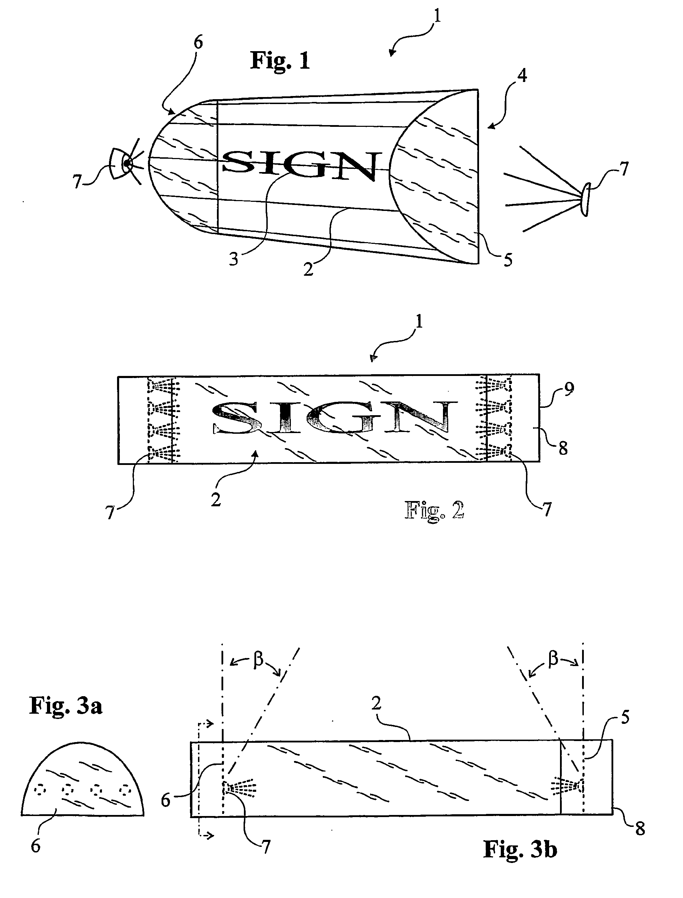

Fig. 1 shows in perspective an electric sign 1 in a preferred embodiment. In this embodiment, the light guiding, transparent material has the shape of a continuous rod with a convex front side 2. The sign has a rear side 4 on which figures 3 have been applied in any manner known to the skilled person. Light-emitting elements 7, schematically shown, are arranged in connection with at least one side surface 5, 6 of the rod.

Fig. 2 shows an electric sign in a front view. Here, the continuous rod 1 with its convex front side 2 is shown with a lighting appliance 8 in connection with both side surfaces. The lighting appliance 8 comprises the light-emitting elements 7, here as a number of light-emitting diodes. As in this case, the rod may be provided with some type of recesses, e.g. drilled holes or grooves, for countersinking of the light-emitting elements 7 a short distance into the light guiding material. The lighting appliance 8 also comprises a casing 9 that is arranged to closely encase the side surface 5, 6 in order to prevent leakage of light via said side surface.

Fig. 3a and 3b show a cross-section and a view from above, respectively, of the electric sign. The electric sign is preferably designed such that it admits the casing 9 to conceal the light-emitting elements 7, at least along the front side 2 of the electric sign and at a view from the front of the electric sign. In a preferred embodiment, the light-emitting elements 7 are concealed to the viewer also when he is positioned at a location where a viewing angle (β) between said location and the side surface 5, 6 is at least 15°, preferably at least 30° and even more preferred at least 45°.

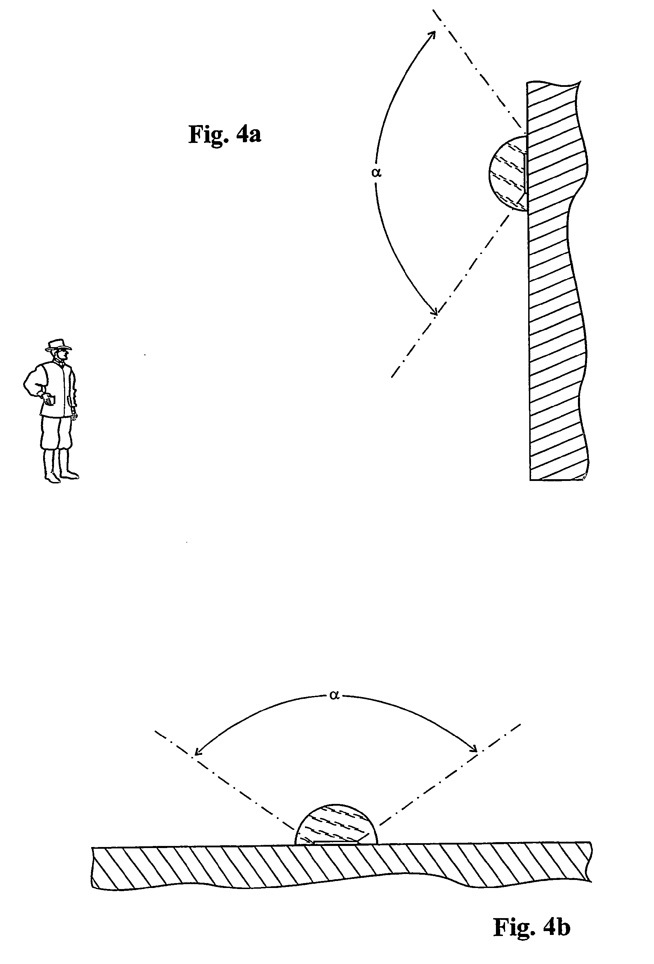

By the convex shape of the front side 2, the advantage is attained that the figures 3 are clearly visible from very large radial viewing angles (α), which is illustrated in Figs. 4a and 4b.

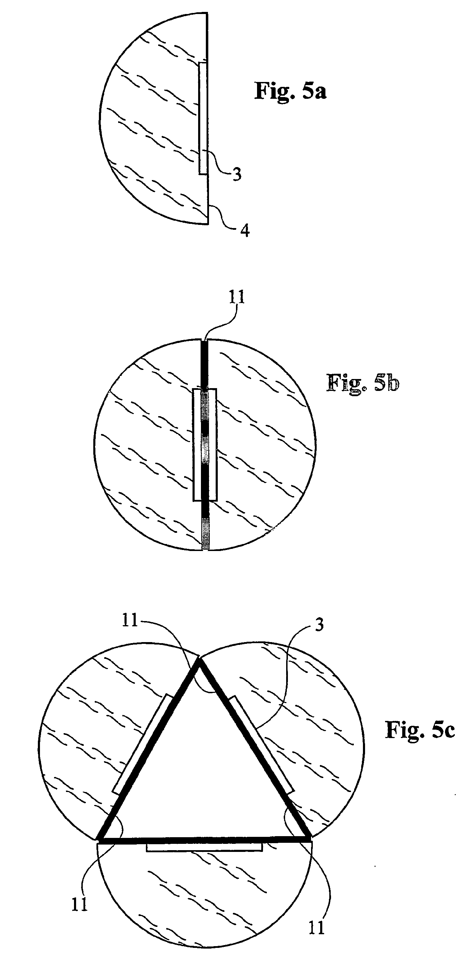

Fig. 5a shows a cross-section of an electric sign 1 in the form of a transparent, light guiding rod according to a preferred embodiment of the invention. It should be understood that the rear side 4 need not be completely planar. Of course, the convex front side 2 can be given another bend radius than the one shown. As in this case, the figures 3 can be in the form of light-reflecting ribs/grooves at the rear side 4, but the skilled person will realise that this is only one example and that other ways of applying the figures also are comprised in the invention. For example, printed stickers or foil may have been brought into contact with the rear side. The figures can also be painted directly onto the rear side.

In addition to larger viewing angles, an optical magnification of the figures 3 is obtained. The viewing angel and the optical magnification are both dependent of the bend radius of the convex surface. In the preferred embodiment, the electric sign is given such a bend radius that a cross-section of the transparent material, i.e. a section parallel to a side surface 5, 6 is given the shape of a semi circle. Also elliptical shapes are conceivable, but the height between the rear side and the convex front side 2, this height being measured perpendicular to the rear side 4 in the point in which the convex front side 2 has its maximum, is preferably at least 1/4, even more preferred 1/3 of the radial length of the rear side.

Fig. 5b shows a cross-section of a double electric sign consisting of two combined, transparent rods. If it is desired to have an electric sign with a text that can be read from both sides, two convex rods can be attached to each other with an intermediate, non-transparent barrier layer 11. Furthermore, the skilled person will realise that several rods can be placed in juxtaposition, so that each sign unit comprises for example three rods in the form of a triangular sign or four rods in the form of a rectangular sign, where triangular and rectangular, respectively, refers to the space enclosed by the rear sides of the rods, se Fig. 5c.

Fig. 6a shows an alternative embodiment of an electric sign according to the invention. As is apparent, this does not have the shape of a rod, but is characterised in that the light guiding material has the shape of a split sphere 12. The lighting appliance 8 is arranged along a side surface 15 of the split sphere 12, and accordingly the convex front side 2 is in direct contact with the rear side 4 along a main part of the outside edge 13 of the rear side.

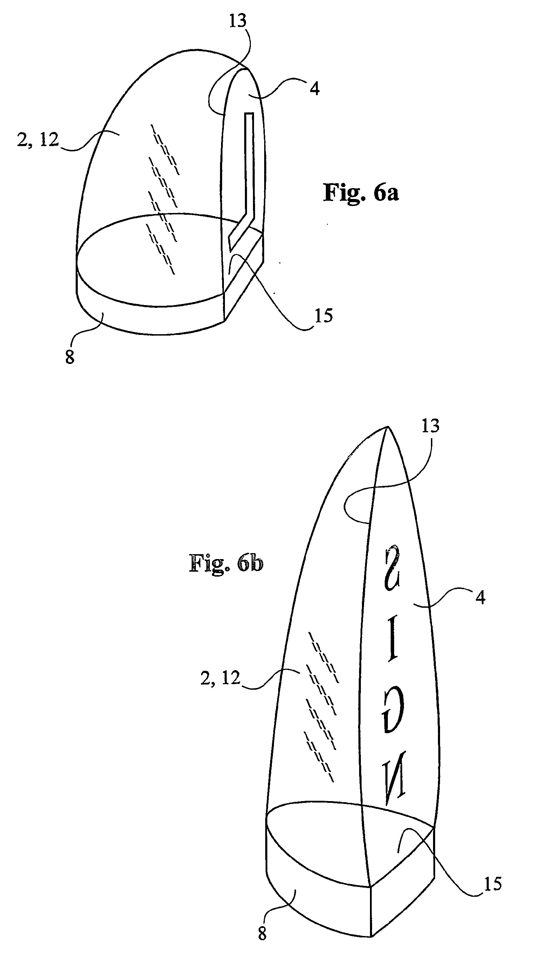

Fig. 6b shows yet an alternative embodiment.

It is realised that thanks to the design of the light guiding material, where the convex front side 2, apart from the portion along the side surface/surfaces 5, 6, is in direct communication with the rear side 4, the electric sign need not anywhere a conventional coating with a light impervious or light-reflecting coating or be provided with an enclosing frame to prevent unwanted leakage of light. Thanks to the design, an electric sign is also obtained that is of cantilever design, which means that it need not be provided with a structural element. Furthermore, it is realised that the electric sign can be given a varied shaped. Accordingly, electric signs are also comprised in which the light guiding material can be given different geometrical shapes, at a view from the front, but in which the front side 2 is given a convex shape.

## Claims

1. An electric sign comprising a front side (2), a rear side (4) and at least one side surface (5, 6, 15) that extends between and links together the front side (2) and the rear side (4), where a light guiding interior of a transparent material is comprised between said front side (2), rear side (4) and side surface (5, 6, 15), a lighting appliance (8) being arranged in connection with said side surface (5, 6, 15) in order to emit light to the light guiding material, and the rear side (4) being adapted to comprise figures (3) reflecting the light from the lighting appliance (8), through the front side (2) of the electric sign, **characterised in that** the front side (2) of the electric sign (1) is convex.

2. An electric sign according to claim 1, **characterised in that** the convex front side (2) at least partly is in direct communication with the rear side (4).

3. An electric sign according to claim 2, **characterised in that** it has a bend radius that results in a height (h) between the rear side (4) and the convex front side (2), the height (h) being measured perpendicular to the rear side (4) in the point in which the convex front side (2) has its maximum, which height (h) preferably is at least 1/4, even more preferred 1/3 of the radial length of the rear side (4).

4. An electric sign according to claim 3, **characterised in that** it comprises two opposing side surfaces (5, 6), **in that** the front surface (2) extends between these side surfaces (5, 6), and **in that** the front surface (2) along the side of the electric sign that extends between the two opposing side surfaces (5, 6) is in direct communication with the rear side (4).

5. An electric sign according to claim 4, **characterised in that** is has the shape of a rod.

6. An electric sign according to any one of the preceding claims, **characterised in that** the lighting appliance (8) comprises a casing (9) and at least one light-emitting element (7) arranged inside the casing (9), and **in that** the casing (9) is arranged to closely enclose the side surface (5) in order to prevent leakage of light via said side surface (5).

7. An electric sign according to claim 6, **characterised in that** the light-emitting element (7) is positioned inside the casing (9) in such a way that the casing (9), at least at least along the front side (2) of the electric sign, conceals the light-emitting element (7) at a view of the electric sign from a location at which a viewing angle (v) between said location and the side surface (5, 6, 15) is at least 15°, preferably at least 30° and even more preferred at least 45°.

## Patentansprüche

1. Elektrisches Schild umfassend eine Vorderseite (2), eine Rückseite (4) und mindestens eine Seitenfläche (5, 6, 15), die sich zwischen der Vorderseite (2) und der Rückseite (4) erstreckt und diese miteinander verbindet, in dem ein lichtleitender Innenraum aus einem transparenten Material zwischen der Vorderseite (2), Rückseite (4) und Seitenfläche (5, 6, 15) besteht, wobei ein Beleuchtungsgerät (8) in Verbindung mit der Seitenfläche (5, 6, 15) angeordnet ist, um Licht an das lichtleitende Material abzugeben, und die Rückseite (4) so ausgelegt ist, dass sie Zeichen (3) umfasst, die das Licht vom Beleuchtungsgerät (8) durch die Vorderseite (2) des elektrischen Schilds reflektieren, **dadurch gekennzeichnet, dass** die Vorderseite (2) des elektrischen Schilds (1) konvex ist.

2. Elektrisches Schild nach Anspruch 1, **dadurch gekennzeichnet, dass** die konvexe Vorderseite (2) zumindest teilweise in direkter Verbindung mit der Rückseite (4) steht.

3. Elektrisches Schild nach Anspruch 2, **dadurch gekennzeichnet, dass** es einen Krümmungsradium aufweist, der zu einer Höhe (h) zwischen der Rückseite (4) und der konvexen Vorderseite (2) führt, die vorzugsweise mindestens 1/4, noch bevorzugter 1/3 der radialen Länge der Rückseite (4) beträgt, wobei die Höhe (h) senkrecht zur Rückseite (4) an dem Punkt gemessen wird, an dem die konvexe Vorderseite (2) ihr Maximum hat.

4. Elektrisches Schild nach Anspruch 3, **dadurch gekennzeichnet, dass** es zwei gegenüberliegende Seitenflächen (5, 6) umfasst, dass sich die Vorderfläche (2) zwischen diesen Seitenflächen (5, 6) erstreckt und dass die Vorderfläche (2) entlang der Seite des elektrischen Schilds, die sich zwischen den beiden gegenüberliegenden Seitenflächen (5, 6) erstreckt, in direkter Verbindung mit der Rückseite (4) steht.

5. Elektrisches Schild nach Anspruch 4, **dadurch gekennzeichnet, dass** es die Gestalt eines Stabs aufweist.

6. Elektrisches Schild nach einem der vorhergehenden Ansprüche, **dadurch gekennzeichnet, dass** das Beleuchtungsgerät (8) ein Gehäuse (9) und mindestens ein lichtabgebendes Element (7) umfasst, welches in dem Gehäuse (9) angeordnet ist, und dass das Gehäuse (9) zur nahen Umhüllung der Seitenfläche (5) angeordnet ist, um Ausströmen von Licht über die Seitenfläche (5) zu verhindern.

7. Elektrisches Schild nach Anspruch 6, **dadurch gekennzeichnet, dass** das lichtabgebende Element (7) so in dem Gehäuse (9) positioniert ist, dass das Gehäuse (9), zumindest entlang der Vorderseite (2) des elektrischen Schilds, das lichtabgebende Element (7) bei einem Blick auf das elektrische Schild von einer Stelle verbirgt, an der ein Blickwinkel (β) zwischen dieser Stelle und der Seitenfläche (5, 6, 15) mindestens 15°, vorzugsweise mindestens 30° und noch bevorzugter mindestens 45° beträgt.

## Revendications

1. Enseigne électrique comprenant un côté avant (2), un côté arrière (4) et au moins une surface latérale (5, 6, 15) qui s'étend entre et relie ensemble le côté avant (2) et le côté arrière (4), où un intérieur guidant la lumière en matériau transparent est compris entre ledit côté avant (2), ledit côté arrière (4) et ladite surface latérale (5, 6, 15), un appareil d'éclairage (8) étant agencé en connexion avec ladite surface latérale (5, 6, 15) afin d'émettre de la lumière vers le matériau de guidage de lumière, et le côté arrière (4) étant adapté pour comprendre des figures (3) réfléchissant la lumière de l'appareil d'éclairage (8), à travers le côté avant (2) de l'enseigne électrique, **caractérisée en ce que** le côté avant (2) de l'enseigne électrique (1) est convexe.

2. Enseigne électrique selon la revendication 1, **caractérisée en ce que** le côté avant convexe (2) est au moins partiellement en communication directe avec le côté arrière (4).

3. Enseigne électrique selon la revendication 2, **caractérisée en ce qu'**elle a un rayon de courbure qui a pour résultat une hauteur (h) comprise entre le côté arrière (4) et le côté avant convexe (2), la hauteur (h) étant mesurée perpendiculairement au côté arrière (4) au point où le côté avant convexe (2) est à son maximum, laquelle hauteur (h) est de préférence égale à au moins 1 /4, et de préférence 1/3 de la longueur radiale du côté arrière (4).

4. Enseigne électrique selon la revendication 3, **caractérisée en ce qu'**elle comprend deux surfaces latérales en vis-à-vis (5, 6), **en ce que** la surface avant (2) s'étend entre ces deux surfaces latérales (5, 6), et **en ce que** la surface avant (2) suivant le côté de l'enseigne électrique qui s'étend entre les deux surfaces latérales en vis-à-vis (5, 6) est en communication directe avec le côté arrière (4).

5. Enseigne électrique selon la revendication 4, **caractérisée en ce qu'**elle a la forme d'une barre.

6. Enseigne électrique selon l'une quelconque des revendications précédentes, **caractérisée en ce que** l'appareil d'éclairage (8) comprend un boîtier (9) et au moins un élément émettant de la lumière (7) agencé à l'intérieur du boîtier (9), et **en ce que** le boîtier (9) est agencé pour bien entourer la surface latérale (5) afin d'empêcher une perte lumineuse par ladite surface latérale (5).

7. Enseigne électrique selon la revendication 6, **caractérisée en ce que** l'élément émettant de la lumière (7) est positionné à l'intérieur du boîtier (9) de telle sorte que le boîtier (9), au moins le long du côté avant (2) de l'enseigne électrique, masque l'élément émettant de la lumière (7) à une observation de l'enseigne électrique à partir d'un emplacement auquel un angle de vision (v) entre ledit emplacement et la surface latérale (5, 6, 15) est au moins égal à 15°, de préférence au moins égal à 30° et même au moins égal à 45°.
